(19)

Europäisches
Patentamt
European
Patent Office
Office européen
des brevets

(11) **EP 4 575 309 A1**

(12) **EUROPEAN PATENT APPLICATION**

(43) Date of publication:
**25.06.2025 Bulletin 2025/26**

(21) Application number: **24221650.5**

(22) Date of filing: **19.12.2024**

(51) International Patent Classification (IPC):
*F21V 8/00* (2006.01)     *G02B 6/122* (2006.01)
*G02B 6/30* (2006.01)     *G02B 6/42* (2006.01)
*G02B 6/12* (2006.01)

(52) Cooperative Patent Classification (CPC):
**G02B 6/1228; G02B 6/12002; G02B 6/305;**
G02B 6/12004; G02B 6/4214

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 US 202363613131 P**

(71) Applicant: **Xanadu Quantum Technologies Inc.
Toronto, Ontario M5G 2C8 (CA)**

(72) Inventors:
• **Srinivasan, Ashwyn Srinivasan
Toronto (CA)**
• **Morrison, Blair
Toronto (CA)**

(74) Representative: **Lehmann Novo, Maria Isabel
Lehmann & Fernández, S.L.
Calle Alvarez de Baena, 4
28006 Madrid (ES)**

(54) **OPTICAL WAVEGUIDE AND METHOD FOR ANGLED RADIATION OF LIGHT**

(57)     There is described an optical device (100) and a method of propagating an optical mode within an optical device (100) such that the optical mode radiates at an angle. An optical core (106) encased within a cladding layer (104) extends towards a distal end of the optical device and transmits an optical mode. A radiation layer (108) having a refractive index greater than the optical core (106) is supported above the cladding layer (104) and at least partially vertically overlaps the optical core. The optical core (106) is configured to enlarge a spot size of the optical mode within a portion of the optical core (122) that vertically overlaps the radiation layer (108), therefore causing the optical mode to radiate within the radiation layer (108) at an angle.

FIG. 1

EP 4 575 309 A1

**Description**

CROSS-REFERENCE TO RELATED APPLICATIONS

This application claims the benefit of, and priority to, United States Provisional Patent Application No. 63/613,131, filed on December 21, 2023 and titled "OPTICAL WAVEGUIDE AND METHOD FOR ANGLED RADIATION OF LIGHT," the contents of which are incorporated herein by reference in their entirety.

BACKGROUND OF THE INVENTION

The present application relates to optical waveguides, and in particular to optical waveguides having angled radiation.

Integrated optical waveguides play a pivotal role in the implementation of modern photonics, enabling the efficient transmission and manipulation of light within photonic integrated circuits (PICs). The waveguides are typically made from dielectric materials and are configured to confine and guide light between various on-chip components.

However, conventional unidirectional radiation of light signals is insufficient to achieve desired functionalities in certain applications. Hence, increasing efforts have been made towards the development of integrated optical waveguides capable of angled radiation. In general, angled radiation refers to the deliberate introduction of angular deviation in the direction of light travel within the waveguide structure. The angled radiation capability enables the design of advanced integrated devices that can couple light into and out of waveguides, achieve nonreciprocal transmission, implement beam steering, or even realize novel on-chip functionalities such as mode division multiplexing.

Various designs for angled radiation waveguides including grating couplers, prism couplers, and waveguide tapers have been described in academic literature. However, at least some of these designs have proven to be difficult to manufacture due to the use of materials that are not readily compatible in a waveguide form, difficulty of assembly as the waveguide and photodetector are respectively discrete apparatus, or failure to achieve a sufficiently high radiation efficiency due to poor optical coupling efficiency between the waveguide and a target component such as a photodetector.

For example, in "High efficiency Silicon-on-Insulator grating coupler based on a polySilicon overlay," Vol. 14, No. 24/OPTICS EXPRESS 1 1622(2006) by Roelkens *etal.* describe etching a diffraction grating into an optical waveguide to radiate light from the waveguide in an angled direction. However, such a design requires high-precision lithography and an etching step in order to obtain the required grating. Simple gratings radiate light both at an upward angle and a downward angle, thereby suffering from low radiation efficiency in the desired direction. More complex gratings, such as that required by the design described in Roelkens, use multiple etch patterning steps or a reflective surface below the waveguide. While these may lead to improved performance, such designs are generally complex to manufacture, highly limited in the selection of materials (as each silicon layer must have a carefully chosen refractive index), and require high-precision lithography. Even then, the radiation efficiency into a single desired direction is typically below 90%, and indeed Roelkens only achieves an efficiency of 78%.

A similar approach using a diffraction grating is described in "III-V-on-silicon integrated micro - spectrometer for the 3 $\mu$m wavelength range," Opt. Express 24, 9465-9472 (2016) by Muneeb *et al.* Specifically, an angled light beam is directed towards a III-V photodetector by means of a diffraction grating etched into a waveguide. The measured radiation efficiency is only about 10%.

Thus, there is a need to provide an improved waveguide configured for angled radiation of an optical signal that at least partially overcomes one or more of the deficiencies of the prior art.

SUMMARY OF THE INVENTION

In various examples, the present disclosure describes an integrated optical waveguide and method that may be implemented to achieve angled optical radiation. The waveguide disclosed herein may be capable of achieving relatively high optical radiation efficiency. In some examples, the waveguide described herein may be capable of achieving angled radiation efficiencies of over 90%. In some further embodiments, the waveguide disclosed herein may achieve an angled radiation efficiency of 98%, permitting its use in some quantum communication or quantum computation applications.

In some examples, the optical waveguide disclosed herein provides a simplified structure that reduces fabrication complexity and may accommodate greater manufacturing tolerance.

In accordance with a first aspect of the present disclosure, there is provided an optical device comprising: a substrate; a cladding layer supported above the substrate; an optical core having a first refractive index encased within the cladding layer, the optical core extending towards a distal end of the optical device and configured to transmit an optical mode having a spot size along a lengthwise direction of the optical core; and a radiation layer, supported above the cladding layer, that at least partially vertically overlaps the optical core, the radiation layer configured to have a second refractive index, the second refractive index being higher than the first refractive index, wherein at least a portion of the optical core that vertically overlaps the radiation layer is configured to enlarge the spot size of the optical mode causing the optical mode to at least partially radiate within the radiation layer at an angle.

In accordance with a second aspect of the present disclosure, there is provided a method of propagating an optical mode within an optical waveguide, the method comprising: propagating the optical mode having a spot size along an optical core having a first refractive index, the optical core being encased within a cladding layer supported above a substrate of the optical device; maintaining the spot size of the optical mode in an entry region of the optical waveguide, the entry region defined as up to a first cross-sectional plane defined by the beginning of a radiation layer supported above the cladding layer, the radiation layer configured to have a second refractive index, higher than the first refractive index, and at least partially vertically overlap the optical core; increasing the spot size of the optical mode such that the optical mode begins to radiate into the radiation layer; and radiating the optical mode at an angle from the optical core towards the radiation layer due to a difference in refractive indices between the optical core and the radiation layer.

Any of the above aspects may be further configured to comprise an entry region extending up to a first cross-sectional plane at an edge of the radiation layer that vertically overlaps the optical core, wherein, in the entry region, the optical core is configured to maintain the spot size such that the optical mode propagates substantially devoid of any signal perturbations at the edge of the radiation layer; and a tapering region in which the optical core is vertically overlapped by the radiation layer, wherein the optical core is configured to radiate the optical mode from the optical core into the radiation layer at an angle.

Any of the above aspects may further comprise a transition region in between the entry region and the tapering region extending from the first cross-sectional plane to a second cross-sectional plane, wherein in the transition region, the optical core is configured to enlarge the spot size until the optical mode begins to radiate into the radiation layer.

Any of the above aspects may further comprise an extension region extending from the distal end of the optical core, wherein, in the extension region, the optical core is configured to minimize signal reflections from the optical device.

In any of the above aspects, in the transition region, the optical core may have a first tapering profile having a first tapering rate.

In any above aspects, in the tapering region, the optical core may have a second tapering profile having a second tapering rate, the second tapering rate being greater than the first tapering rate.

In any of the above aspects, each of the first and second tapering profiles may be any of a polynomial, stepwise, and linear tapering profile.

In any of the above aspects, the optical core may a first optical core, and the optical device may further comprise: a second optical core configured parallel to the first optical core in at least the transition region and the tapering region, the second optical core configured to expand the spot size in the transition region, and to decouple the optical mode from the first and second optical cores in the tapering region.

In any of the above aspects, the radiation layer may be any one of a III-V, II-VI and group-IV semiconductor compound.

In any of the above aspects, the radiation layer may be of any one of InGaAs, InGaAsP, InP, InGaAsSb, InAsSb, InAs, GaAs, InSb, Ge, GeSn, and SiGeSn.

In any of the above aspects, the optical core may be of any one of SiN, SiO2N2, Si, BaTiO3, LiNbO3, InGaAsP, GaAs, and air.

In any of the above aspects, the radiation layer may be a photodetecting element.

In any of the above aspects, a reflective layer may be supported over the radiation layer to maximize optical mode retention within the radiation layer.

In any of the above aspects, the cladding layer may have a refractive index less than the first refractive index.

In any of the above aspects, the propagating may further comprise: enlarging the spot size in a transition region of the optical core from the first cross-sectional plane to a second cross sectional plane; and refracting the optical mode from the optical core towards the radiation layer at a refraction angle due to a difference in refractive indices between the optical core and the radiation layer.

In any of the above aspects, the propagating may further comprise minimizing signal perturbations in an extension region of the optical core.

Any of the above aspects may further comprise detecting an optical property of the optical mode by the radiation layer.

In any of the above aspects, the enlarging may further comprise: configuring the transition region to have a first tapering profile having a first tapering rate; and configuring the tapering region to have a second tapering profile having a second tapering rate, wherein the first tapering rate is less than the second tapering rate.

In any of the above aspects, the propagating may further comprise: optically coupling the optical mode with a second optical core a transition region of the optical device until the optical mode begins to radiate into the radiation layer; decoupling the optical mode from both the first optical core and the second optical core by configuring the first and second optical core to taper towards a distal end of the optical waveguide; and refracting the optical mode towards the radiation layer from the second optical core at a refractive angle.

BRIEF DESCRIPTION OF THE DRAWINGS

Reference will now be made, by way of example, to the accompanying drawings which show example embodiments of the present application, and in which:

FIG. 1 shows a perspective view of an exemplary integrated optical waveguide in accordance with the present disclosure;

FIG. 2 shows a cross-sectional side view of an embodiment of the waveguide taken along the A-A line in FIG. 1;

FIG. 3 shows a cross-sectional top view of an embodiment of the waveguide taken along the B-B line in FIG. 1;

FIG. 4 shows a cross-sectional top view of an embodiment of the waveguide taken along the B-B line in FIG. 1 with an auxiliary core introduced in the transition region; and

FIG. 5 shows a flowchart of a method for achieving angled radiation within an optical waveguide in accordance with one or more embodiments of the present disclosure.

Like reference numerals are used throughout the Figures to denote similar elements and features. While aspects of the invention will be described in conjunction with the illustrated embodiments, it will be understood that it is not intended to limit the invention to such embodiments.

DETAILED DESCRIPTION OF THE INVENTION

As used herein, "propagating" and "propagation" refer to the transmission of an optical mode within the optical medium of the optical waveguide, where the optical mode is substantially confined within the optical waveguide. The terms "radiating" and "radiation" refer to the optical mode travelling outside of the waveguide.

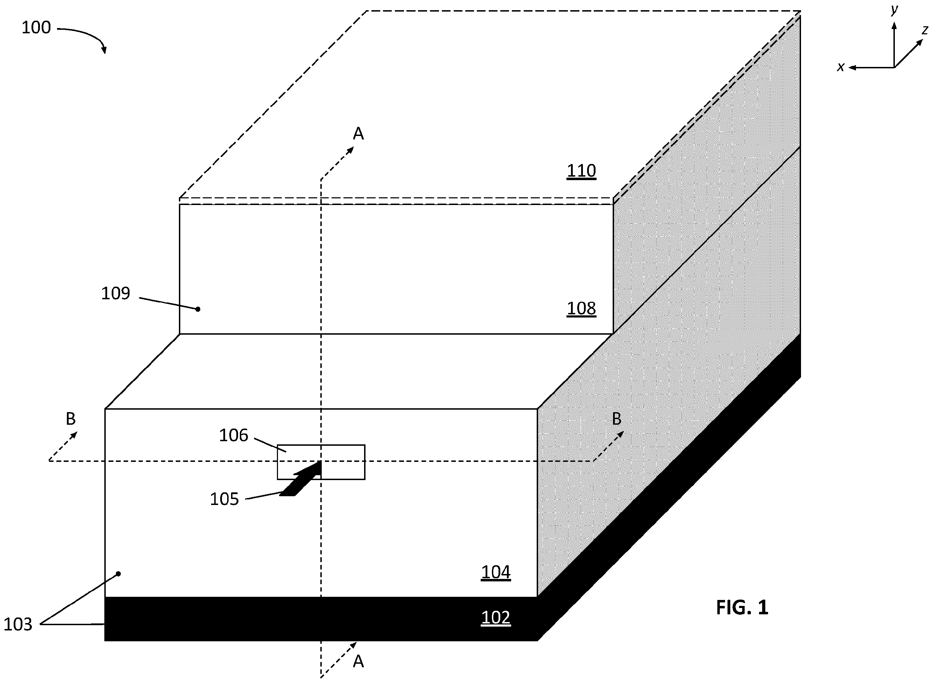

FIG. 1 shows a perspective view of an exemplary integrated optical waveguide in accordance with the present disclosure. Integrated optical waveguide 100 is configured to propagate optical signals between various integrated photonic components configured to perform certain photonic functionalities on a PIC. The various integrated photonic components can include, but are not limited to, optical beam splitters, optical wavelength filters, optical resonators, optical waveguides, optical wavelength multiplexers, optical couplers, optical polarizers, optical isolators, polarization rotators, photodetectors, optical amplifiers, lasers, light-emitting devices, etc. All optical components are typically elements that directly interact with light. The waveguide 100 may be configured to propagate optical signals typically having a wavelength ranging from the ultraviolet (UV) spectrum to the infrared spectrum. Although shown as an independent device, in some embodiments, the optical waveguide 100 may form a part of an overall waveguide structure in a PIC.

In FIG. 1, optical waveguide 100 includes a substrate 102, which is configured to support one or more cladding layers on top. The substrate 102 may be fabricated with any suitable material, including silicon (Si), gallium arsenide (GaAs), indium phosphide (InP), and silicon dioxide ($SiO_2$) for example. The thickness of the substrate 102 may be dependent upon fabrication technology and/or application. Typically, the thickness of the substrate layer 102 is that of a typical semiconductor chip ranging from 100 $\mu$m to 1000 $\mu$m.

At least one cladding layer 104 is supported above the substrate layer 102. The cladding layer 104 may be fabricated with any suitable cladding material, such as $SiO_2$, SiN, and gallium aluminum arsenide (GaAlAs) for example. One or more optical elements, including core 106, as well as modulators, switches, and detectors (not shown), may be fabricated by any suitable means such as etching (mechanical or chemical), engraving, bonding, and/or lithography into the upper surface of the cladding layer 104. In some embodiments, the cladding layer 104 and the substrate layer 102 may define a facet 103 of the waveguide 100, wherein the facet 103 may be configured for coupling and/or interfacing with other components of the PIC. Alternatively, when the optical waveguide 100 is a portion of a waveguide structure of a PIC, the facet 103 may be a conceptual, as opposed to a physical, boundary.

Core 106 is typically a high-index optical medium configured to extend from the facet 103 towards a distal end of the waveguide (i.e., along the z-axis). As shown, the core 106 is encased, or buried, within the cladding layer 104. An optical signal 105, as indicated by the arrow, may be delivered onto the core 106 by any suitable means such as optical coupling. The core 106 is configured to propagate the optical signal 105 from the facet 103 towards a distal end of the optical waveguide along the core 106's lengthwise (z) direction. In some embodiments, the optical signal 105 is confined within the optical waveguide by means of total internal reflection. To this end, the core 106 is to be configured with a refractive index higher than that of the surrounding cladding material of the cladding layer 104. By way of examples, the core 106 may be fabricated with silicon nitride (SiN), silicon oxynitride ($SiO_2N_2$), Si, barium titanate (BaTiOs), lithium niobate ($LiNbO_3$), indium gallium arsenide phosphide (InGaAsP), GaAs, or air. The difference in refractive indices between the core 106 and surrounding cladding material of layer 104 defines a critical angle $\theta_c$. The optical energy of the optical mode 105 may be confined within the core 106 as long as the angle of incidence of the optical signal therewithin is greater than the critical angle. The critical angle is given by the formula:

$$\theta_c = \sin^{-1}(n_2/n_1)$$ 
Equation (1)

where $n_2$ is the refractive index of the surrounding cladding material of cladding layer 104 and $n_1$ is the refractive index of the core 106. The core 106 may be of any suitable cross-sectional geometry (i.e., circular, oval, polygonal, etc.), although it is typically rectangular as shown in FIG. 1.

With respect to the core 106, the cladding layer 104 may be conceptualized as comprising two layers: an upper cladding layer 104A above the top surface of the core 106 and a lower cladding layer 104B below the bottom surface of the core 106. Typically, the refractive index of the substrate 102 may be comparable in magnitude to that of the core 106. Thus, to minimize the size of the modal field of the optical mode 105 and to prevent radiation into the substrate, the lower cladding layer 104B is configured with a layer thickness that is effectively infinite to any optical signal 105 propagating within the core 106. In a preferred embodiment, all cladding material within the cladding layer 104 is nominally identical. In some further embodiments, the upper and lower cladding layers 104A and 104B may be of different cladding materials having different refractive indices. In such embodiments, the propagating optical mode 105 needs to observe two critical angles as may be determined using Equation (1), one at each medium boundary, in order to achieve total internal reflection.

As shown in FIG. 1, a radiation layer 108, towards which the angled radiation is to be directed, may be supported above the upper cladding layer 104A. In some embodiments, the radiation layer is a photodetector formed by growing a photodetection region on a sacrificial substrate. A gripping tooling form is then attached to a surface of the photodetector. After removing the sacrificial substrate, the photodetector is placed onto the cladding layer and the gripping tooling form is removed. In further embodiments, the radiation layer 108 is partially, or substantially, etched into the upper cladding layer 104A. The thickness of the upper cladding layer 104A may be configured to minimize signal perturbations at the boundary facet 109 of the radiation layer 108. In some embodiments, the upper cladding layer 104A may be approximately 300 to 500 nm in thickness between the radiation layer 108 and the core 106. In embodiments where the top boundary facet 109 of the radiation layer 108 is flush with portions of the cladding layer 104, such as above an entry region as described in more detail below, the upper cladding layer 104A may be up to approximately 1000 nm in thickness prior to reaching the radiation layer 108.

The radiation layer 108 is configured to have a refractive index that is higher than both the cladding layer 104 and the core 106. In some embodiments, the radiation layer 108 may be a photodetector layer that is capable of detecting the amount of optical energy or number of photons of the optical mode 105. The output of the radiation layer 108 may be a photocurrent or a change in temperature, which may be measured by external measurement apparatus such as an electrical amplifier (not shown). In photodetection applications, the radiation layer 108 may be fabricated from, for example, any group III-V, II-VI or IV compounds such as InGaAs, InGaAsP, InP, InGaAsSb, InAsSb, InAs, GaAs, InSb, Ge, GeSn, and SiGeSn. In biomedical applications, the radiation layer 108 may be composed of human tissue. Generally, the radiation layer 108 may be of any suitable material so long as the refractive index difference between the cladding layer 104 and the core 106 as described herein is maintained. In an exemplary embodiment, a waveguide in accordance with the present disclosure may include a core 106 of silicon nitride with a refractive index of 1.9, a cladding layer 104 of silica with a refractive index of 1.5, and a radiation layer 108 of indium phosphide with a refractive index of 3.2 all supported above a silicon substrate having a refractive index of 3.48.

The radiation layer 108 is positioned on top of the cladding layer 104 at a distance away from the facet 103 of the waveguide 100 such that the radiation layer 108 is overlaid directly above at least a portion of the core 106. The facet 109 of the radiation layer 108 defines a cross-sectional plane 114. The waveguide 100 is configured such that after the optical mode 105 travels beyond the cross-sectional plane 114, it is radiated at an upwards angle (i.e., in the positive y direction) into the radiation layer 108.

In embodiments where the radiation layer 108 is a photodetector layer, an optional reflective layer 110 may be formed on the top surface of the radiation layer 108. This reflective layer 110 may comprise metal or a stack of dielectric materials. Thus, the optical mode 105 that traverses through the absorbing material of the photodetector layer on its upward trajectory may be directed back through the absorbing material by the reflective layer 110, thereby increasing the likelihood of photo-absorption and, in turn, increasing the detection accuracy.

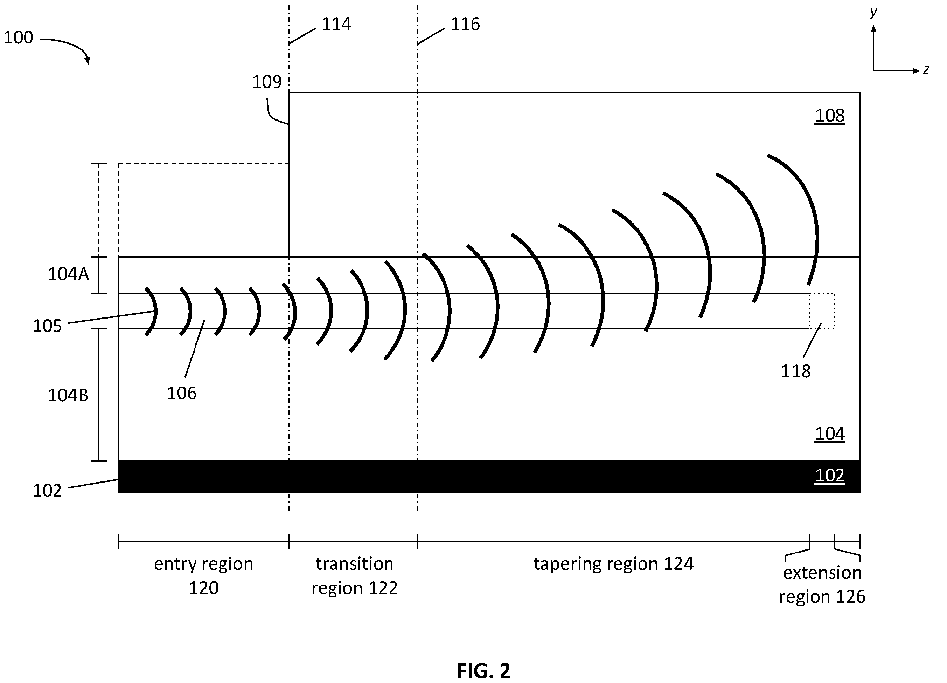

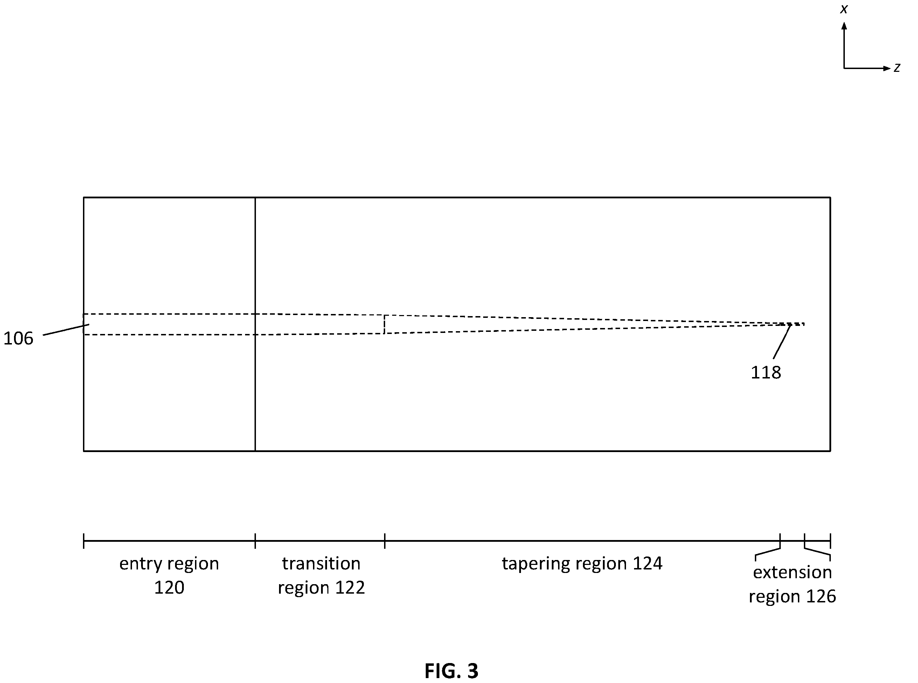

FIG. 2 illustrates a cross-sectional side view of the waveguide 100 taken along the A-A line in FIG. 1, and FIG. 3 illustrates a cross-sectional top view of the waveguide 100 taken along the B-B line in FIG. 1. With reference to FIGS. 2 and 3, the waveguide 100 may be conceptualized as including multiple operating regions that are distinguished in terms of their function.

The optical waveguide 100 includes an entry region 120 that extends up to the cross-sectional plane 114. The entry region is configured to maintain the spot size of the propagating optical mode 105 until the mode is below the radiation layer 108 so as to minimize signal perturbations at the radiation layer facet 109. As a non-limiting example, the radiation layer may be a photodetector such as a III-V photodiode, and the radiation layer facet 109 may be an edge of the photodetector. The photodetector may be integrated onto the cladding 104 by any suitable means such as transfer printing or heterogeneous integration. Within the entry region 120, the optical mode 105 is a tightly bound optical mode propagating along the lengthwise direction of the core 106 while its optical power is substantially confined within the core material. In this tightly bound mode, the optical field of the mode 105 radiates minimally outside of core 106, and in preferred embodiments extends to a distance less than the thickness of the upper cladding layer 104A, into the surrounding cladding material. The width of the core 106 within the entry region may be 500 nm to 1500 nm and its thickness may be 200 to 400 nm depending on the size of the PIC, fabrication process, and/or the properties of the optical mode 105.

In some embodiments, the tolerances of the fabrication process of the optical waveguide 100 may be eased by increasing the thickness of the upper cladding layer 104A, as the optical mode 105 may have a larger spot size while still minimizing signal reflections. The increased upper cladding thickness renders it more difficult for the optical mode 105 to radiate through. Rapid optical mode expansion caused by aggressive tapering of the core 106 would cause excessive downward coupling of the optical mode 105, resulting in elevated loss. To avoid this, in such cases, such as the one shown in FIGS. 2 and 3, the optical mode 105 is guided from the entry region 120 into an optional transition region 122. The transition region 122 extends from cross sectional plane 114 to cross sectional plane 116 and is configured to enlarge the spot size of the optical mode 105 through the upper cladding layer 104A.

In some embodiments, the increase in mode size within the transition region 122 is accomplished by a "single-core" configuration where the region includes a portion of the core 106 extending from the entry region 120 to the tapering region 124. In such embodiments, the width of the core 106 in the transition region 122 is configured with a tapering profile having a tapering rate. The gradual tapering rate weakens the optical confinement of the optical mode within the core and permits the optical energy of the mode to expand at least along the y-axis. Therefore, the propagation of optical mode 105 within the core 106 in the transition region 122 is not strictly as a fully guided mode. The tapering of the transition region 122 continues until the spot size is enlarged sufficiently such that it begins to radiate into the radiation layer 108.

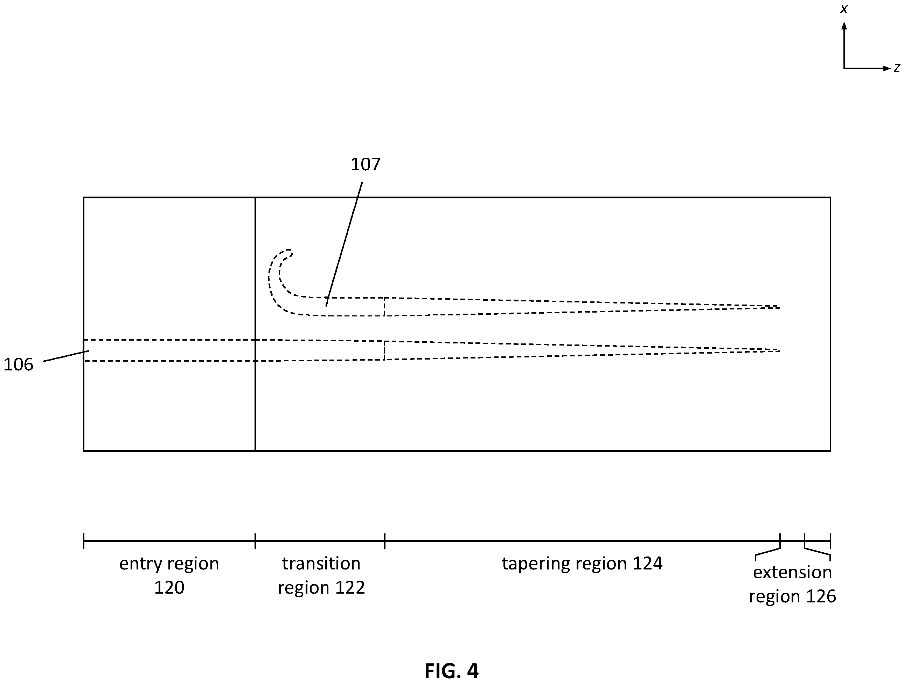

In some other embodiments, the increase in mode size within the transition region 122 is accomplished through a "double-core" configuration where the region includes a portion of core 106 as well as an optional auxiliary core 107. As shown in FIG. 4, the auxiliary core 107 is introduced in the transition region 122 as being substantially parallel to and along the same x-z plane as the core 106 in such a way that the two cores 106 and 107 are evanescently coupled. As a result, upon entering into the transition region 122, the optical energy of the optical mode 105 becomes spatially concentrated within the cladding material between the two cores. In some embodiments, both core 106 and auxiliary core 107 have matching tapering profiles with substantially identical tapering rates. The auxiliary core 107 may extend past the cross-sectional plane 116 into the tapering region 124, and in some embodiments, into the extension region 126. The "double-core" configuration may permit the mode size to be enlarged at a faster rate without aggressive tapering, which may be ideal in embodiments where the waveguide 100 is desired to be short in length. Although a "double-core" configuration is described herein, it is understood that any other multi-core configuration formed in one or more device layers would also be suitable to achieve the goal of modal size enlargement.

In embodiments where the tapering region 124 alone is sufficient to cause the optical mode 105 to radiate into the radiation layer 108, such as when the thickness of the upper cladding layer 104A is small (e.g., 300 nm), the need for the transition region 122 may be obviated. In such a case, the optical mode 105 is guided directly from the entry region 120 into the tapering region 124. The tapering region 124 may extend from the cross-sectional plane 114 to a distal end of the core 106 in the absence of a transition region 122. Alternatively, in cases where the transition region 122 is present, the tapering region 124 extends from cross sectional plane 116 to the distal end of the core 106.

The tapering region 124 is configured to radiate the optical mode 105 into the radiation layer 108 at an angle by decoupling the optical mode from the core 106. As shown in FIG. 3, within the tapering region 124, the core 106 tapers from an initial width $W_{T1}$ along the x-axis to a terminal width $W_{T2}$ based on a tapering profile having a tapering rate. As illustrated in FIG. 2, the tapering profile may be continuous and uniform having a constant tapering rate (i.e., a linearly decreasing width). In other embodiments, the tapering profile may be any one of discrete step tapering, polynomial order tapering, or any other suitable type of tapering profile where the tapering rate may be stepwise or polynomial in nature. For an optical mode 105 in two-dimensional transverse optical confinement, there are two degrees of freedom in the x-y transverse plane. As the width of core 106 decreases due to tapering, the optical confinement in the x-axis is reduced, and the optical mode propagating therewithin begins to decouple from the core 106 and expand at least along the y-axis to become more unbound in the upwards (or positive y-axis) direction. The expanded optical mode 105 transitions from a fully guided mode of propagation to a weakly bound mode of propagation and begins to radiate through the upper cladding layer 104A and into radiation layer 108. As described, the radiation layer 108 is configured to have a refractive index higher than that of the cladding layer 104 and the core 106, which causes the optical mode to refract such that the direction of radiation bends in the positive y direction towards the radiation layer 108. As the tapering continues, the optical mode 105 gradually, depending on the tapering rate, interacts more strongly with the radiation layer 108 and is directed towards it until a substantial portion of the optical mode 105 is radiating within the radiation layer 108. In embodiments that include an auxiliary core 107, the auxiliary core 107 may extend into the tapering region 124 and have a substantially identical tapering profile and/or tapering rate as those of the core 106 in the region.

In some embodiments, the tapering rate of the transition region 122 is less than that of the tapering region 124. In an exemplary embodiment, a core in accordance with the present disclosure may be configured with a transition region length (in the *z* direction) of approximately 10 $\mu$m and a tapering region length (in the *z* direction) of approximately 100 $\mu$m.

In some embodiments, there may be a residual portion of the optical mode 105 that remains in the optical core 106. This residual optical energy may, as the result of the termination point at the distal end of the core 106, cause signal reflections and interfere with subsequent optical modes 105. Depending on fabrication limitations, the core 106 terminates at a distal end having a width that may range from 100 nm to approximately 500 nm. Accordingly, the waveguide 100 may include an optional extension region 126, wherein the core 106 is extended by an extension tip 118 that is configured to minimize signal reflections within the core 106. The anti-reflection properties of the extension tip 118 may be achieved by further tapering towards a smaller tip width. If the distal end of the core 106 is already at the critical dimension (i.e., the minimum dimension that can be fabricated), then the extension tip 118 may be of uniform width and implement a curved profile to minimize signal reflections. The radius of curvature of a curved extension tip 118 may be defined by the material properties of the extension tip 118 as well as its cross-sectional area.

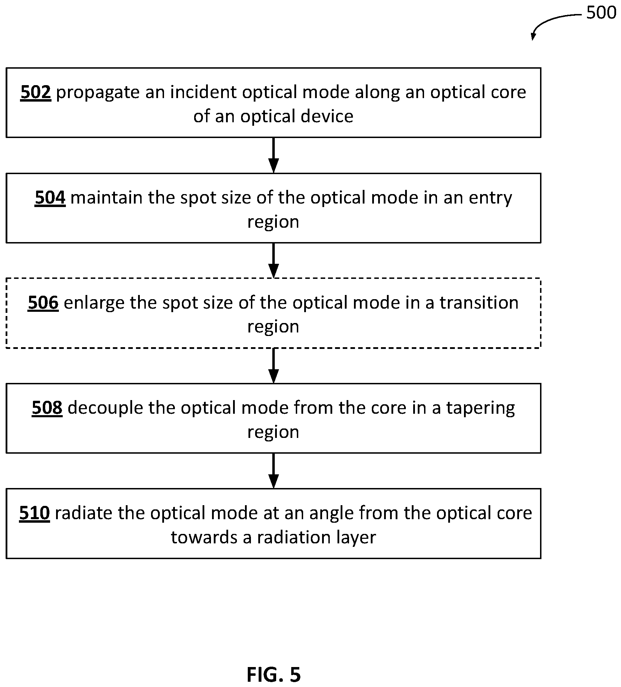

FIG. 5 illustrates a flowchart of a method 500 for achieving angled radiation within an optical waveguide in accordance with one or more embodiments of the present disclosure.

At 502, an incident optical mode having an initial spot size is propagated along an optical core of an optical device. The core is encased within a cladding layer supported above a substrate of the optical waveguide. The optical core is configured with a refractive index that is higher than that of the surrounding cladding material such that the optical mode propagates therewithin in a fully guided mode.

At 504, the spot size of the optical mode is maintained in an entry region of the optical waveguide up to a first cross-sectional plane defined by a frontal facet of a radiation layer supported above the cladding layer. In one aspect, signal perturbations as a result of encountering the radiation layer facet are minimized by maintaining the spot size until the optical mode propagates under the radiation layer. The radiation layer is configured to have a refractive index that is higher than that of the optical core. The radiation layer is overlaid at least partially above the optical core.

Once the optical mode is below the radiation layer, at optional step 506, the spot size of the optical mode is enlarged in a transition region of the waveguide such that the optical mode may extend through the upper cladding layer above the core and begin to at least partially radiate into the radiation layer.

In some embodiments, the spot size enlargement is achieved through propagating the optical mode through a portion of the core configured with a tapering profile having a tapering rate. The tapering rate may be configured to allow the spot size to gradually increase without incurring significant signal loss. The tapering rate of the core in this transition region may be less than that of the subsequent tapering region. In some embodiments, the tapering rate of the core in the transition region is less than that of the tapering region.

In some embodiments, the spot size enlargement may be aided with the presence of an auxiliary core that is configured to be parallel to and along the same x-z plane as the core into which the optical mode was received. The optical mode is evanescently coupled to both cores and propagates within the cladding material centered between the cores. Both the optical core and auxiliary core may be configured to taper towards the distal end of the optical waveguide. The tapering of the two cores causes the optical mode to be more weakly bound between them, and thus it begins to expand, at least along the y-axis, until the optical mode begins to radiate into the radiation layer.

The enlarged optical mode eventually begins to radiate into the radiation layer and refracts from the optical core(s) towards the radiation layer at a refraction angle due to a difference in refractive indices between the core(s) and the radiation layer.

At 508, the optical mode begins to decouple from the optical core in a tapering region of the waveguide. The tapering profile of the core in this region causes the optical mode to gradually expand at least along the y-axis to become more unbound in the upwards (or positive y-axis) direction until the optical energy of the optical mode begins to radiate into the radiation layer.

At 510, a difference in refractive indices between the optical core and the radiation layer causes the optical mode to radiate at an angle from the optical core towards the radiation layer.

In some embodiments, the radiation layer is configured to detect one or more optical properties of the optical mode radiating therewithin. By way of a non-limiting example, the radiation layer is a photodetector that is capable of detecting the number of photons of the optical mode.

Although the present disclosure may describe methods and processes with steps in a certain order, one or more steps of the methods and processes may be omitted or altered as appropriate. One or more steps may take place in an order other than that in which they are described, as appropriate.

Although the present disclosure may be described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, a USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

## Claims

1. An optical device comprising:

   a substrate;
   a cladding layer supported above the substrate;
   an optical core having a first refractive index encased within the cladding layer, the optical core extending towards a distal end of the optical device and configured to transmit an optical mode having a spot size along a lengthwise direction of the optical core; and
   a radiation layer, supported above the cladding layer, that at least partially vertically overlaps the optical core, the radiation layer configured to have a second refractive index, the second refractive index being higher than the first refractive index,

   wherein at least a portion of the optical core that vertically overlaps the radiation layer is configured to enlarge the spot size of the optical mode causing the optical mode to at least partially radiate within the radiation layer at an angle.

2. The optical device of claim 1, configured to comprise:

   an entry region extending up to a first cross-sectional plane at an edge of the radiation layer that vertically overlaps the optical core, wherein, in the entry region, the optical core is configured to maintain the spot size such that the optical mode propagates substantially devoid of any signal perturbations at the edge of the radiation layer; and
   a tapering region in which the optical core is vertically overlapped by the radiation layer, wherein the optical core is configured to radiate the optical mode from the optical core into the radiation layer at an angle.

3. The optical device of claim 2, further comprising:
   a transition region in between the entry region and the tapering region extending from the first cross-sectional plane to a second cross-sectional plane, wherein, in the transition region, the optical core is configured to enlarge the spot size until the optical mode begins to radiate into the radiation layer.

4. The optical device of claim 2, further comprising an extension region extending from the distal end of the optical core, wherein, in the extension region, the optical core is configured to minimize signal reflections from the optical device.

5. The optical device of claim 3, wherein, in the transition region, the optical core has a first tapering profile having a first tapering rate.

6. The optical device of claim 5, wherein, in the tapering region, the optical core has a second tapering profile having a second tapering rate, the second tapering rate being greater than the first tapering rate.

7. The optical device of claim 6, wherein each of the first and second tapering profiles are any of a polynomial, stepwise, and linear tapering profile.

8. The optical device of claim 3, wherein the optical core is a first optical core, the optical device further comprising: a second optical core configured parallel to the first optical core in at least the transition region and the tapering region, the second optical core configured to expand the spot size in the transition region and to decouple the optical mode from the first and second optical cores in the tapering region.

9. The optical device of claim 1, wherein the radiation layer is any one of a III-V, II-VI, and group-IV semiconductor compound.

10. The optical device of claim 1, wherein the radiation layer is of any one of InGaAs, InGaAsP, InP, InGaAsSb, InAsSb, InAs, GaAs, InSb, Ge, GeSn, and SiGeSn.

11. The optical device of claim 1, wherein the optical core is of any one of SiN, SiO2N2, Si, BaTiO3, LiNbO3, InGaAsP, GaAs, and air.

12. The optical device of claim 1, wherein the radiation layer is a photodetecting element.

13. The optical device of claim 1, wherein a reflective layer is supported over the radiation layer to maximize optical mode retention within the radiation layer.

14. The optical device of claim 1, where the cladding layer has a refractive index less than the first refractive index.

15. A method of propagating an optical mode within an optical waveguide, the method comprising:

propagating the optical mode having a spot size along an optical core having a first refractive index, the optical core being encased within a cladding layer supported above a substrate of the optical device;
maintaining the spot size of the optical mode in an entry region of the optical waveguide, the entry region defined as up to a first cross-sectional plane defined by the beginning of a radiation layer supported above the cladding layer, the radiation layer configured to have a second refractive index, higher than the first refractive index, and at least partially vertically overlap the optical core;
increasing the spot size of the optical mode such that the optical mode begins to radiate into the radiation layer; and
radiating the optical mode at an angle from the optical core towards the radiation layer due to a difference in refractive indices between the optical core and the radiation layer.

16. The method of claim 15, wherein the propagating further comprises:

enlarging the spot size in a transition region of the optical core from the first cross-sectional plane to a second cross sectional plane; and
refracting the optical mode from the optical core towards the radiation layer at a refraction angle due to a difference in refractive indices between the optical core and the radiation layer.

17. The method of claim 16, wherein the propagating further comprises minimizing signal perturbations in an extension region of the optical core.

18. The method of claim 15, further comprising detecting an optical property of the optical mode by the radiation layer.

19. The method of claim 16, wherein the enlarging further comprises:

configuring the transition region to have a first tapering profile having a first tapering rate; and
configuring the tapering region to have a second tapering profile having a second tapering rate,

wherein the first tapering rate is less than the second tapering rate.

20. The method of claim 16, wherein the propagating further comprises:

optically coupling the optical mode with a second optical core in a transition region of the optical device until the optical mode begins to radiate into the radiation layer;
decoupling the optical mode from both the first optical core and the second optical core by configuring the first and second optical cores to taper towards a distal end of the optical waveguide; and
refracting the optical mode towards the radiation layer from the second optical core at a refractive angle.

FIG. 1

**FIG. 2**

EP 4 575 309 A1

**FIG. 3**

**FIG. 4**

EP 4 575 309 A1

500

**502** propagate an incident optical mode along an optical core of an optical device

↓

**504** maintain the spot size of the optical mode in an entry region

↓

**506** enlarge the spot size of the optical mode in a transition region

↓

**508** decouple the optical mode from the core in a tapering region

↓

**510** radiate the optical mode at an angle from the optical core towards a radiation layer

**FIG. 5**

Europäisches
Patentamt

European
Patent Office

Office européen
des brevets

## EUROPEAN SEARCH REPORT

**Application Number**

EP 24 22 1650

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/266532 A1 (ZHANG CHONG [US] ET AL) 24 August 2023 (2023-08-24) * paragraphs [0005], [0023] - [0032], [0038], [0048] - [0053], [0056] - [0058], [0062], [0068] * * figures 1-6 * | 1-11, 13-20 | INV. F21V8/00 G02B6/122 G02B6/30 G02B6/42 G02B6/12 |
| X | US 2014/294341 A1 (HATORI NOBUAKI [JP] ET AL) 2 October 2014 (2014-10-02) * paragraphs [0028] - [0041] * * figures 1-3 * | 1-11, 13-20 | |
| X | US 2020/233149 A1 (PARK HYUNDAI [US]) 23 July 2020 (2020-07-23) * paragraphs [0025] - [0049] * * figures 1-5 * | 1-11, 13-20 | |
| A | US 2016/327742 A1 (COLLINS TOM [DE] ET AL) 10 November 2016 (2016-11-10) * paragraphs [0082] - [0129] * * figures 1,3-6,8,10-14 * | 1-20 | |

**TECHNICAL FIELDS SEARCHED (IPC)**

G02B

The present search report has been drawn up for all claims

| Place of search | Date of completion of the search | Examiner |
|---|---|---|
| Berlin | 2 April 2025 | Moroz, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 1650

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2025

| Patent document cited in search report | Publication date | Patent family member(s) | | Publication date |
|---|---|---|---|---|
| US 2023266532 A1 | 24-08-2023 | CN | 116661062 A | 29-08-2023 |
| | | EP | 4231066 A1 | 23-08-2023 |
| | | JP | 7440567 B2 | 28-02-2024 |
| | | JP | 2023121105 A | 30-08-2023 |
| | | US | 11719883 B1 | 08-08-2023 |
| US 2014294341 A1 | 02-10-2014 | JP | 6175263 B2 | 02-08-2017 |
| | | JP | 2014191301 A | 06-10-2014 |
| | | US | 2014294341 A1 | 02-10-2014 |
| US 2020233149 A1 | 23-07-2020 | CN | 111902756 A | 06-11-2020 |
| | | EP | 3714299 A1 | 30-09-2020 |
| | | JP | 7034259 B2 | 11-03-2022 |
| | | JP | 2021513667 A | 27-05-2021 |
| | | US | 2020233149 A1 | 23-07-2020 |
| | | US | 2020284979 A1 | 10-09-2020 |
| | | WO | 2020154005 A1 | 30-07-2020 |
| US 2016327742 A1 | 10-11-2016 | CN | 106125195 A | 16-11-2016 |
| | | EP | 3091379 A1 | 09-11-2016 |
| | | JP | 6683535 B2 | 22-04-2020 |
| | | JP | 2016212415 A | 15-12-2016 |
| | | US | 2016327742 A1 | 10-11-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63613131

**Non-patent literature cited in the description**

- **ROELKENS**. High efficiency Silicon-on-Insulator grating coupler based on a polySilicon overlay. *OPTICS EXPRESS*, 2006, vol. 14 (24), 1-1622

- **MUNEEB**. III-V-on-silicon integrated micro - spectrometer for the 3 $\mu$m wavelength range. *Opt. Express*, 2016, vol. 24, 9465-9472